# EUROPEAN PATENT APPLICATION

(11) **EP 2 871 389 A2**
(43) Date of publication of application: **13.05.2015**
(21) Application number: 14192443.1
(22) Date of filing: 10.11.2014
(51) Int. Cl.: F16H 61/70, F16H 61/04

(54) **Method and control device in a vehicle**

(30) Priority: 12.11.2013 SE 1351333
(71) Applicant: Scania CV AB, 151 87 Södertälje (SE)
(72) Inventor: Kjell, Anders, 178 38 Ekerö (SE); Udd, Jonas, 112 25 Stockholm (SE)
(74) Representative: Scania CV AB

(57) **Abstract**

Method (400) and control device (115) for control of an Automated Manual Transmission, AMT, gearbox (113) in a vehicle (100). The gearbox (113) comprises a split gearbox (210) and a main gearbox (220), and is especially arranged for shifting with zero shift technology. The method (400) comprises detection (401) of a shift request; placement (402) of the split gearbox (210) in a neutral position; engagement (403) of the requested main gear (220) with zero shift technology, and shifting (406) to the requested split gear (210).

## Description

### TECHNICAL FIELD

This document describes a method and a control device in a vehicle. Specifically, a method is specified to control an AMT gearbox in a vehicle, where the AMT gearbox comprises a split gearbox and a main gearbox and is especially arranged for shifting with zero shift technology.

### BACKGROUND

When changing gears in a vehicle, the vehicle's driveline is in a zero torque state during the shifting. The vehicle is thus not driven forward by the engine during the time when the shifting is completed, but continues to roll in the travelling direction as a consequence of moment of inertia.

Vehicle in this context means e.g. a truck, truck with trailer, pickup, van, wheel loader, bus, off-road vehicle, tracked vehicle, tank, quad, passenger car or other similar motor-driven, manned or unmanned transport means, adapted for land-based geographic transportation.

Gear transmission in such vehicles often consists of a gear transmission of "manual" gearboxes with stepwise shifting, controlled by a control system, also called AMT (Automated Manual Transmission), e.g. because these are significantly cheaper to manufacture, but also because of their higher efficiency compared to traditional automatic transmission. They also weigh less. As regards heavy goods vehicles, which are largely used on country roads/motorways, AMT gearboxes are therefore usually used. Such gearboxes often comprise three parts: a split gear, a main gearbox and a range gear, which cooperate with each other. When shifting, the main gearbox is in neutral and then the split and/or range gear is shifted from high to low or vice versa. Subsequently, the new gear may be engaged in the main gearbox. This means that the shifting process is time-consuming and the speed of the vehicle therefore decreases during the shifting process.

The vehicle's zero torque when shifting may become difficult for the vehicle and its driver, especially perhaps when shifting in somewhat harder conditions, such as transport on a bumpy uphill road at low speed and with a heavy load. Since the engine has no traction power in the driving direction during the shifting process, the vehicle therefore quickly loses speed because of the combination of uphill slope and heavy load.

This may be particularly problematic when driving in a mine or quarry, where heavy loads and uphill slopes often occur in combination with a substandard road that restricts the speed. If the gearbox tries to up-shift, the new higher gear may have too low an engine speed after the shifting as a consequence of the reduced vehicle speed, which in turn means that the engine generates such a low torque that the vehicle cannot cope and therefore stalls; alternatively, the gearbox down-shifts soon after, which again leads to a zero torque state and thus further reduced vehicle speed. Accordingly, the vehicle loses speed, which leads to delayed transport out of the mine. When a vehicle gets out of sync with other mining vehicles, a queue may form, further reducing transport speed, not only for the vehicle in question but also for other vehicles behind.

One method developed to accelerate the shifting in vehicles is called zero shift. Zero shift technology entails that the subsequent gear is engaged while the current gear is still engaged. Thus, while the shifting time is shortened, and thus also the time which the vehicle spends in a zero torque state during the shifting, the consequence is unfortunately a disruption to comfort in the form of blows and shocks in the vehicle during shifting. This is a consequence of large energies propagating via the driveline at zero shift shifting, due to rotation speed errors when a gear is engaged with this technology. This is uncomfortable and disrupting for the vehicle's driver and possible passengers in e.g. a bus, since the shifting must be done extra carefully, as passengers might be standing up in the vehicle, in order to avoid sudden jerks during the shifting which may cause passengers to lose their balance or get hurt. Because of such extra careful shifting, the shifting time is extended further, which leads to additionally reduced speed of the vehicle.

It may be concluded that much remains to be done to improve the shifting in a vehicle with an AMT gearbox.

### SUMMARY

Therefore, an objective of this invention is to be able to resolve at least one of the problems specified above, and thus to improve the method during shifting in a vehicle with an AMT gearbox and thus to achieve a vehicle improvement.

According to a first aspect of the invention, this objective is achieved by a method in a control device for the control of an AMT gearbox in a vehicle. Such an AMT gearbox comprises a split gearbox and a main gearbox and is especially arranged for shifting with zero shift technology. The method comprises detection of a shifting request. Further, the method also comprises placement of the split gearbox in neutral. The method also comprises engagement of a requested main gear with zero shift technology. The method also comprises shifting to a requested split gear.

According to a second aspect of the invention, this objective is achieved by a control device arranged to control the shifting of an AMT gearbox in a vehicle, wherein the AMT gearbox comprises a split gearbox and a main gearbox. The AMT gearbox is also especially arranged for shifting with zero shift technology. The control device comprises a processor circuit, arranged to detect a shifting request, and also arranged to generate a control signal to place the split gearbox in neutral. Such processor circuit is also arranged to generate a control signal to engage a requested main gear with zero shift technology. Additionally, the processor circuit is also arranged to generate a control signal to shift to a requested split gear.

By placing the split gearbox in neutral, shifting with so-called zero shift technology may be carried out in the main gearbox without the disruption to driving comfort that, according to prior art technology, has been associated with zero shift technology. Accordingly, shifting may be completed quickly, which means the vehicle's zero torque state is shortened, without any disadvantages in the form of significant disruption to driving comfort. By placing the split gearbox in neutral, the clutch inertia is disconnected. Accordingly, the disruption to driving comfort caused by the shifting is reduced. Additionally, according to certain embodiments, the split gearbox may be synchronised with either synchronisation between a cogwheel of the split gearbox and an input shaft of the AMT gearbox, or with an input shaft brake of the AMT gearbox. Accordingly, the shifting performance is improved for the AMT gearbox and the vehicle.

Other advantages and other novel features are set out in the following detailed description of the invention.

### LIST OF FIGURES

Embodiments of the invention are described below in further detail with reference to the enclosed figures, which illustrate embodiments of the invention:
- **Fig. 1A**: illustrates a vehicle according to one embodiment.
- **Fig. 1B**: illustrates a vehicle according to one embodiment.
- **Fig. 2A**: illustrates an example of an AMT gearbox according to one embodiment.
- **Fig. 2B**: illustrates a shaft brake according to one embodiment.
- **Fig. 2C**: illustrates a shaft brake according to one embodiment.
- **Fig. 3**: illustrates the principle of zero shift transmission.
- **Fig. 4**: is a flow chart illustrating one embodiment of the invention.
- **Fig. 5**: is an illustration of a control device according to one embodiment of the invention.

### DETAILED DESCRIPTION

Embodiments of the invention comprise a method and a control device, which may be realised according to any of the examples described below. This invention may, however, be realised in many different forms and shall not be seen as limited by the embodiments described herein, which are instead intended to illustrate and visualise various aspects of the invention.

Further aspects and features of the invention may become apparent from the following detailed description when considered in connection with the enclosed figures. The figures should, however, only be seen as examples of various embodiments of the invention and should not be seen as limiting the invention, which is limited only by the enclosed claims. Further, the figures are not necessarily drawn to scale and are, unless otherwise indicated, intended to illustrate the aspects of the invention conceptually.

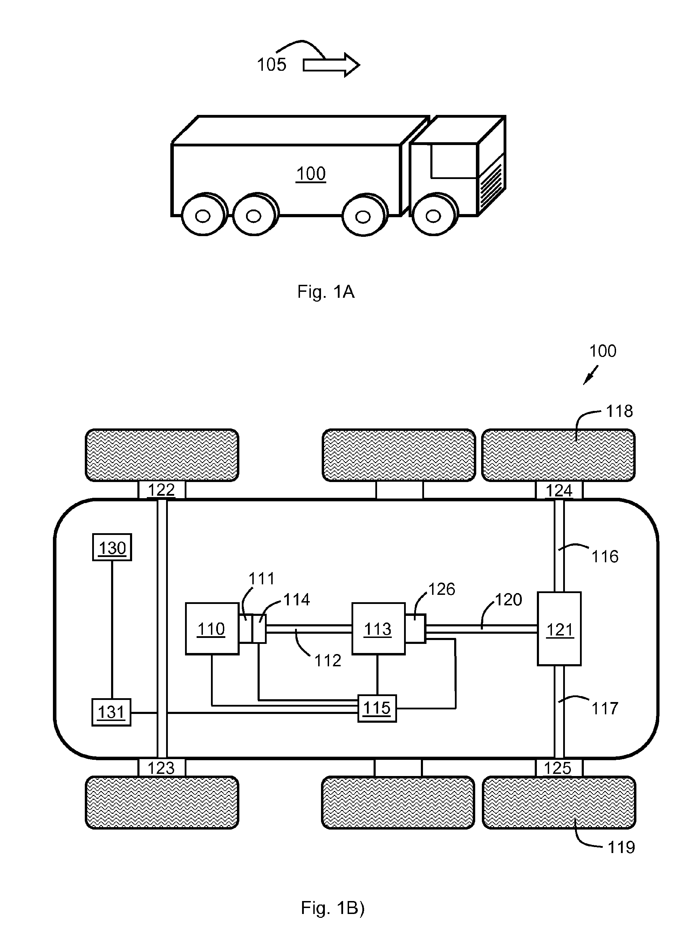

**Fig. 1A** shows a vehicle **100**, adapted for shifting and motor-driven travel in, among others, a first travelling direction 105. For example, but not necessarily, the vehicle 100 may be a truck on the way out of a mine or a quarry. In other embodiments, the vehicle 100 may be e.g. a bus loaded with tourists on an icy Alpine road, by way of an example; or it may simply be any of the previously listed types of vehicles.

**Fig. 1** **B** schematically shows a driveline in the vehicle 100 according to one embodiment of the present invention. The driveline comprises a combustion engine **110**, which via an output shaft connected on the combustion engine 110, e.g. via a flywheel, is connected with an input shaft **112** of an automated manual transmission gearbox (AMT gearbox) **113** via a clutch **114**. A sensor **111** may be especially arranged to detect the combustion engine's speed on the output shaft.

The clutch 114 may e.g. consist of an automatically controlled clutch, which for example may be of a dry plate type. The friction element's (plate's) engagement with the flywheel on the engine output shaft may be controlled with the help of a pressure plate, which is displaceable laterally by means of e.g. a lever, whose function is controlled by a clutch actuator. The clutch actuator's impact on the lever is in turn controlled by the vehicle's clutch control system via a control device **115**. The control device 115 also controls the AMT gearbox 113. Such a control device may sometimes, for example, be called a Transmission Control Unit (TCU). For the sake of simplicity, Fig. 1B above shows only one control device 115, where functions for several different control functions are gathered, such as control of the combustion engine 110, but the vehicle 100 may in other embodiments comprise several control devices, to which the control functions mentioned above may be allocated.

The control algorithm controlling the vehicle's AMT gearbox 113 is impacted by one or more parameters, which may be driver dependent, indirectly driver dependent or driver independent, e.g. the vehicle's inclination, the vehicle's weight, the vehicle type, ride comfort, the gas pedal's position, the gas pedals' position change speed, performance choices, vehicle speed and/or engine speed, just to mention a few, according to different embodiments.

The vehicle 100 also comprises drive shafts **116, 117** connected to the vehicle's driving wheels **118, 119,** and which are driven by an output shaft **120** from the gearbox 113 via a shaft gear **121,** e.g. a differential shaft. The vehicle 100, which is schematically shown in Fig. 1B, comprises only two driving wheels 118, 119, but embodiments of the invention are applicable also to a vehicle 100 with several drive shafts, equipped with one or several driving wheels.

The vehicle 100 may also comprise a braking system, which may comprise e.g. brake plates **122-125** with associated brake pads (not displayed) arranged next to the wheels 118, 119. The brake pads' pressure against the brake plates 122-125 when braking force is generated is controlled with the help of the vehicle's control systems, e.g. with the help of the control device 115, which may be arranged to send signals to the regulator(s) that regulate braking force in the braking system, when the driver presses a brake pedal, when e.g. an emergency braking system sends a brake request or when it is otherwise indicated that braking of the vehicle 100 is desired.

The vehicle 100 also comprises a driver's cabin in which a driving environment is arranged in the customary manner with instruments, controls, etc. The driver's environment may also comprise a display **130** for presentation of information to the vehicle's driver. For example, information related to the vehicle's shifting may, according to certain embodiments, be presented here, e.g. a shift schedule or a text/image that informs about the engaged gear and/or gearing interval for the engaged gear.

The control system in the vehicle 100 may consist of a communication bus system, consisting of one or several communications buses to connect a number of electronic control devices (ECUs), or control devices/controllers, and different components localised in the vehicle 100. Such a control system may comprise a large number of control devices, and the responsibility for a specific function may be distributed among more than one control device. Similarly, a control device may be arranged to be responsible for several functions.

The control device 115 may in turn be arranged to communicate with other devices, in order to receive signals and measurement values, and possibly also trigger a measurement, e.g. at a certain time interval. Further, the control device 115 may also be arranged to communicate e.g. via the vehicle's communication bus, which may consist of one or several of a cable; a data bus, such as a CAN (Controller Area Network) bus, a MOST (Media Oriented Systems Transport) bus, or another bus configuration.

The control device 115 may also, or alternatively, be arranged for wireless communication over a wireless interface, according to some embodiments. The wireless interface may consist of a radio transmitter based on wireless communication technology such as 3rd Generation Partnership Project (3GPP), Long Term Evolution (LTE), LTE-Advanced, Evolved Universal Terrestrial Radio Access Network (E-UTRAN), Universal Mobile Telecommunications System (UMTS), Global System for Mobile Communications/Enhanced Data rate for GSM Evolution (GSM/EDGE), Wideband Code Division Multiple Access (WCDMA), World-Wide Interoperability for Microwave Access (WiMax), Wireless Local Area Network (WLAN) Ultra Mobile Broadband (UMB), Bluetooth (BT), Near Field Communication (NFC) or an infrared transmitter, mentioned herein as a few possible examples of wireless communication.

Accordingly, the control device 115 may also receive detected parameter values e.g. from the sensor/engine speed sensor 111, such as the engine's speed.

For the sake of simplicity, Fig. 1B above shows only one control device 115, where functions for several different control functions are gathered, such as control of the combustion engine 110, but the vehicle 100 may in other embodiments comprise several control devices, to which the control functions mentioned above may be allocated.

When selecting gears for the AMT gearbox 113, one or several parameters are used, e.g. rolling resistance, road gradient, rig weight, speed, outside temperature, projected speed of alternative gear, projected impact on alternative gear, accelerating power, comfort level, and/or vehicle speed, mentioned herein as a few examples.

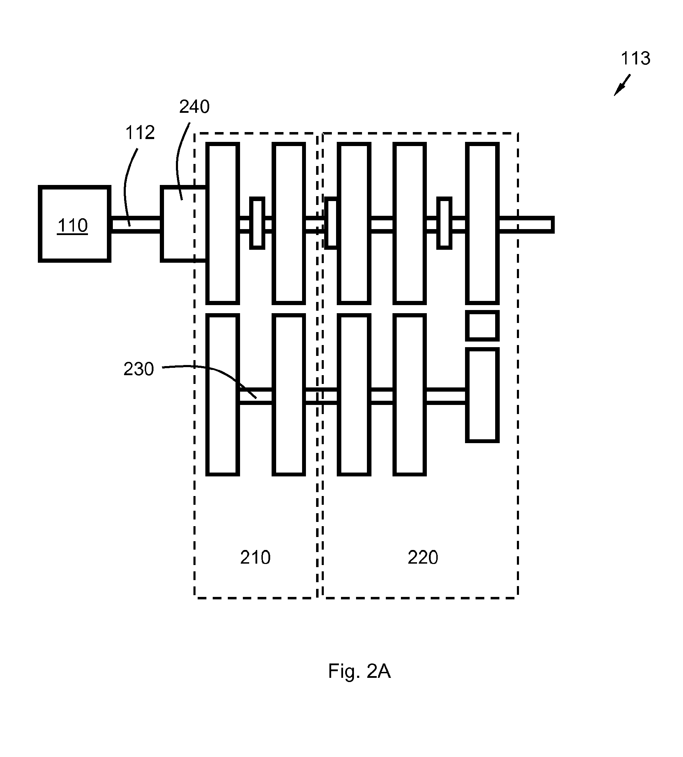

**Fig. 2A** schematically shows an AMT gearbox 113 in the vehicle 100. The AMT gearbox 113 comprises a split gearbox **210** and a main gearbox **220**. Further, the AMT gearbox 113 comprises a range gearbox (not displayed) which may consist of a planetary gear. A side shaft **230** is placed in connection with the split gearbox 210. In some embodiments, an input shaft brake **240** may be placed on the input shaft 112 from the engine 110. The shaft brake 240 is arranged to synchronise, i.e. to brake the input shaft 112 towards a target speed, which is below the existing speed. Shifting to a requested split gear 210 may then be carried out when the input shaft 112 is synchronised with the target speed, according to some embodiments.

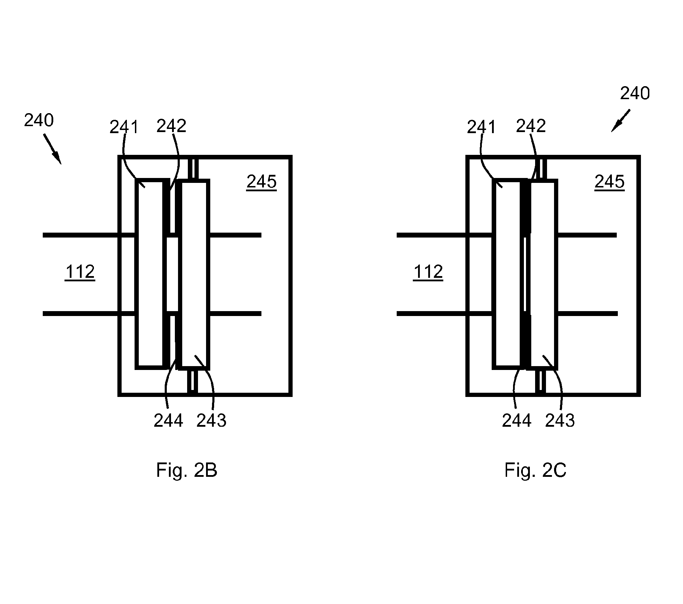

**Fig. 2B** shows an example of a shaft brake 240 in an unbraked state. The shaft brake 240 may e.g. consist of a friction brake such as a plate brake. Such a plate brake may comprise at least one co-rotating brake element **241** with one or two respective friction surfaces **242**, wherein the brake element 241 is connected with the input shaft 112, so that it may rotate with and/or be manoeuvred axially on the input shaft 112. This co-rotating brake element 241 is arranged to cooperate with a non-rotating brake element **243**, which comprises one or two respective friction surfaces **244** and has a shape that corresponds to the shape of the brake element 241. The non-rotating brake element 243 may be manoeuvred axially, but is attached to e.g. a surrounding brake house **245**, so that it is prevented from rotating with the input shaft 112. By pressing the respective friction surfaces 242, 244 on the co-rotating brake element 241 and the non-rotating brake element 243 against each other, a braking friction arises, reducing the speed of the input shaft 112. For example, the shaft brake 240 may comprise co-rotating brake elements 241 in the form of plates, which are interspersed with non-rotating brake elements 243, also those in the form of plates.

**Fig. 2C** shows an example of the shaft brake 240 in a braked state. The friction surfaces 242, 244 on the co-rotating brake element 241 and the non-rotating brake element 243 are pressed against each other, so that a braking action arises and the rotation speed of the input shaft 112 is reduced.

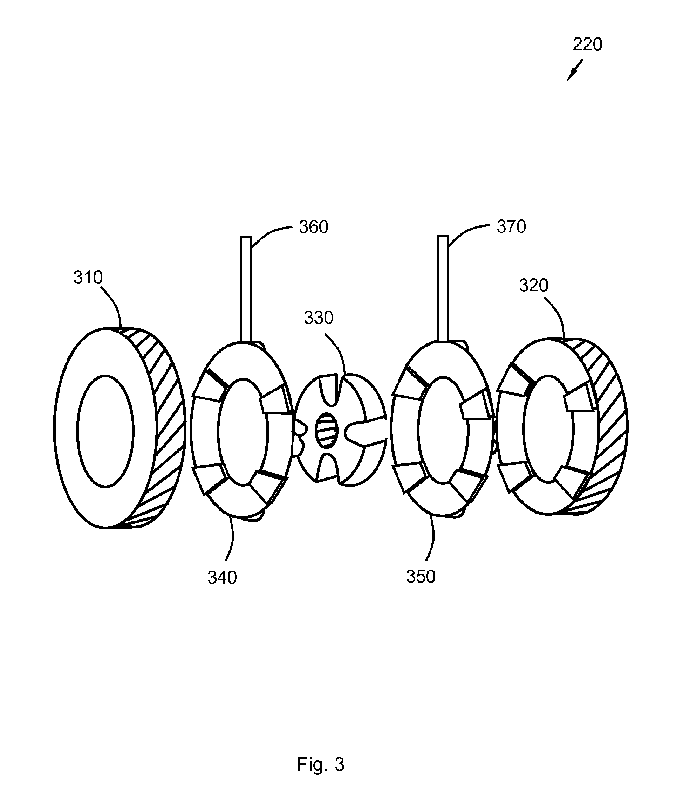

**Fig. 3** schematically shows the principle for zero shift technology, which as such constitutes prior art, in a main gearbox 220 in an AMT gearbox 113. In a first driving mode, a first main gear cogwheel **310** is operated by a sleeve **330**, which in turn is attached on the main shaft, with e.g. splines, via a first push ring **340**. This first push ring 340 is adapted to transmit the torque from the main shaft, via the sleeve 330, to the first main gear cogwheel 310, through cooperating projecting elements and sockets on the component parts. Further, the main gearbox 220 comprises a second push ring 350, which is adapted to transmit torque from the main shaft, via the sleeve 330, to the second main gear cogwheel 320, through cooperating projecting elements and sockets on the component parts. The push rings 340, 350 are arranged to be manoeuvred into engagement and to disengage by axially manoeuvring the respective push rings 340, 350 via shift forks **360**, **370**. These shift forks 360, 370 may be manoeuvred e.g. via hydraulic or pneumatic engagement. By disconnecting power transmission via the first push ring 340 when shifting to another gear, by moving the shift fork 360, at the same time as the second push ring 350 is manoeuvred to engage via its shift fork 370, a very quick shifting may be carried out, since the subsequent gear is engaged while the existing gear is still engaged.

By placing the split gearbox 210 in a neutral position when the zero shift shifting is carried out in the main gearbox 220, i.e. from the first main gear cogwheel 310 to the second main gear cogwheel 320, the clutch inertia is disconnected. Accordingly, the disruption to driving comfort for the vehicle's driver is minor, since the clutch plates with their inertia are disconnected, so that a reduced oscillation in the driveline arises when shifting, at the same time as shifting is completed quickly, reducing the period during which the vehicle's driveline is in a zero torque state. When the main gearbox 220 later engages, the shifting of the split gearbox 210 may be completed. The split gearbox 210 may then in some embodiments be synchronised, either with synchronisation between a cogwheel and the input shaft 112 or with an input shaft brake 140, in order to increase the shifting performance in the AMT gearbox 113.

According to traditional zero shift technology, the main gearbox 220 is not synchronised at all, the new gear is simply engaged. This is not particularly comfortable for the vehicle's driver as a consequence of speed errors. In accordance with the present invention, by placing the split gearbox 210 into neutral, the blow is not transmitted to the engine 110 and the shifting becomes significantly less uncomfortable for the driver. Since the input shaft 112 and the heavy clutch plate are synchronised at the same time as the main gearbox 220 is shifted, there is not so great a blow when the split gear 210 is engaged.

It is advantageous to have a brake 140 on the input shaft 112, since the braking torque may be reduced when the speed difference approaches zero. This increases the driving comfort. A synchronisation between a cogwheel of the split gearbox 210 and the input shaft 112 brakes with the same torque all the time, and it may become somewhat uncomfortable when the engine speed difference is zero and the split gear is about to be engaged. According to some embodiments, the input shaft 112 is synchronised with the input shaft brake 140, according to other embodiments the input shaft 112 is synchronised with a synchronisation between a cogwheel of the split gearbox 210 and the input shaft 112.

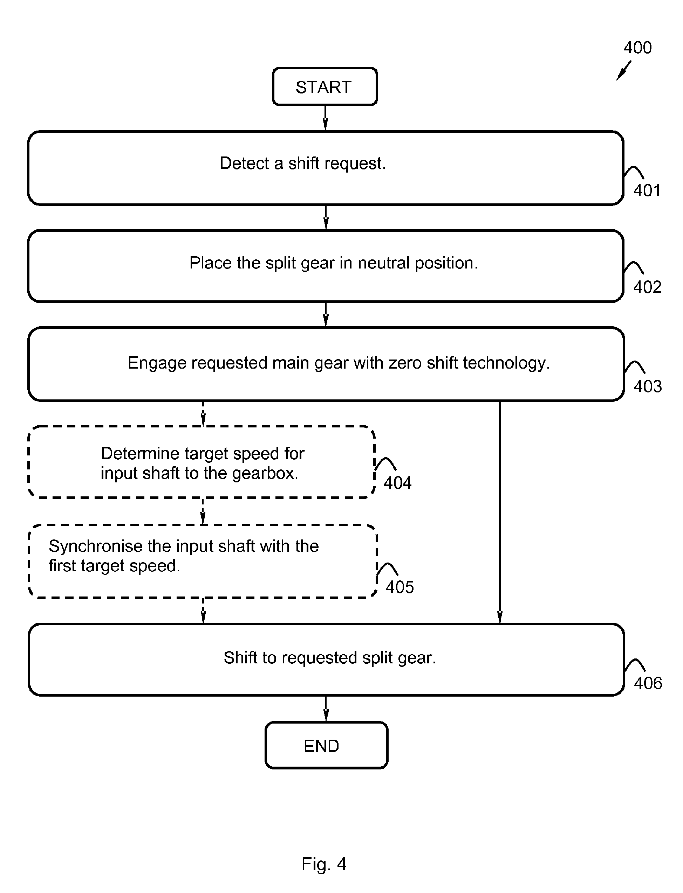

**Fig. 4** illustrates an example of one embodiment of the invention. The flow chart in Fig. 4 illustrates a method 400 in a control device 115 for control of an AMT gearbox 113 in a vehicle 100. The AMT gearbox 113 comprises a split gearbox 210 and a main gearbox 220, the latter being especially arranged for shifting with zero shift technology. The objective of the method 400 is to facilitate shifting of the main gearbox 220 with zero shift technology, at the same time as the disruption to the driving comfort for the vehicle's driver is reduced.

When selecting gears for the AMT gearbox 113 one or several parameters may be used, e.g. engine speed, vehicle speed, rig weight, accelerating effect and/or comfort level, mentioned herein as a few possible examples.

In order to be able to correctly control the AMT gearbox 113 in the vehicle 100, the method 400 may comprise a number of steps **401-406**. It should be noted, however, that some of the steps described herein are only included in certain alternative embodiments of the invention, e.g. steps 404 and 405. Further, the steps 401-406 described herein may be carried out in a somewhat different chronological order than suggested by the numbering, and some of them may be completed in parallel with each other. The method 400 comprises the following steps:

### Step 401

A shift request relating to a requested gear, such as in the main gearbox 220, is detected. Such a shift request may e.g. be triggered when a switching point at a speed curve is reached. The requested gear comprises at least a requested gear in the main gearbox 220. Optionally, the requested gear may also comprise a requested gear in the split gearbox 210.

### Step 402

The split gearbox 210 is now placed in neutral. According to the present invention this is always done, i.e. also in situations where only a gear in the main gearbox 220 is to be shifted according to the shift request and no gear is to be shift in the shift gearbox 220.

Accordingly, according to some embodiments the shift request may relate to a requested main gear only, and the requested split gear may consist of the same split gear as prior to the shift request.

### Step 403

The requested main gear 220 is engaged with zero shift technology.

### Step 404

This method step may be carried out in certain, but not necessarily all, embodiments of the method 400.

A target speed is determined for an input shaft 112 to the AMT gearbox 113.

### Step 405

This method step may be carried out in certain, but not necessarily all, embodiments of the method 400.

The input shaft 112 is synchronised with the determined 404 target speed.

According to some embodiments, such synchronisation of the input shaft 112 with the target speed may be done simultaneously, in parallel with the engagement 403 of the requested main 220 with zero shift technology, completely or partly overlapping in time.

Synchronisation of the input shaft 112 with the target speed may in some embodiments, where the target speed is lower than the speed of the input shaft 112, comprise a reduction of the speed of the input shaft 112 by way of braking of said input shaft 112 with a shaft brake 240, arranged in connection with the input shaft 112. According to certain embodiments, the synchronisation of the input shaft 112 with the target speed may, however, comprise an increase of the speed of the input shaft 112 by way of a speed increase with the vehicle's engine 110, connected with the input shaft 112.

### Step 406

Shifting is carried out to the requested split gear 210. The requested split gear may be the same split gear as the split gear which was engaged prior to step 402, or the other split gear than the split gear which was engaged prior to step 402.

In some embodiments, shifting to the requested split gear 210 may be made when the input shaft 112 has been synchronised 405 with the determined 404 target speed.

Shifting may in some embodiments be to a higher gear, wherein the target speed is lower than the speed of the input shaft 112. Shifting may also be made to a lower gear according to some embodiments, wherein the target speed is higher than the speed of the input shaft 112.

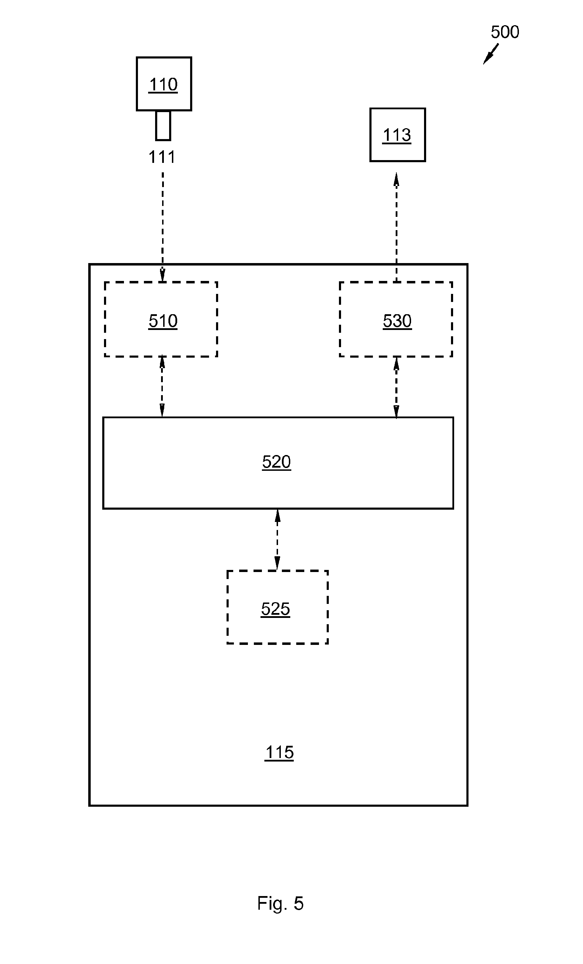

**Fig. 5** illustrates an embodiment of a system **500**, comprising a control device 115, arranged to control the shifting of an AMT gearbox 113 in a vehicle 100. The AMT gearbox 113 comprises a split gearbox 210 and a main gearbox 220. The latter is especially arranged for shifting with zero shift technology. The AMT gearbox 113 may also comprise a range gearbox, which may be set in a high gear position and a low gear position.

This control device 115 is configured to carry out at least some of the previously described method steps 401-406, comprised in the description of the method 400 for control of an AMT gearbox 113 in the vehicle 100.

In order to correctly control the shifting of the AMT gearbox 113, the control device 115 comprises a number of components, which are described in more detail in the text below. Some of the component parts described only occur in certain, but not necessarily all, embodiments. There may also be some additional electronic components in the control device 115, which are not entirely necessary in order to understand the function of the control device 115 according to the invention, and these are therefore omitted from Fig. 5 and from this description.

The control device 115 comprises a processor circuit **520** arranged to detect a shift request. Further, the control device 115 is also arranged to generate a control signal in order to place the split gearbox 210 in a neutral position. The control device 115 is also arranged to generate a control signal to engage the requested main gear 220 with zero shift technology. Additionally, the control device 115 is also arranged to generate a control signal to shift to the requested split gear 210.

The processor circuit 520 may also, according to some embodiments, be arranged to determine a target speed for an input shaft 112 to the AMT gearbox 113. According to some embodiments, the processor circuit 520 may also be arranged to generate a control signal to synchronise the input shaft 112 with the determined target speed. Further, the processor circuit 520 may also be arranged to generate a control signal to shift to the requested split gear 210 when the input shaft 112 has been synchronised with the determined target speed.

According to some embodiments, the processor circuit 520 may also be arranged to generate a control signal to synchronise the input shaft 112 with the target speed simultaneously with the engagement of the requested main gear 220 with zero shift technology.

In some embodiments, shifting may be done to a higher gear, wherein the target speed is lower than the speed of the input shaft 112, wherein the processor circuit 520 may be arranged to synchronise the input shaft 112 with the target speed by reducing the speed of the input shaft 112, through generating a control signal to brake said input shaft 112 with a shaft brake 240 arranged in connection with the input shaft 112.

In some embodiments, shifting may be done to a lower gear, where the target speed is higher than the speed of the input shaft 112, wherein the processor circuit 520 may be arranged to synchronise the input shaft 112 with the target speed by increasing the speed of the input shaft 112, through generating a control signal to increase the speed of said input shaft 112 via a speed increase with the vehicle's engine 110, connected to the input shaft 112.

The processor circuit 520 may consist of e.g. one or several Central Processing Units (CPU), a microprocessor or other logic adapted to interpret and carry out instructions and/or to read and write data. The processor circuit 520 may handle data for inflow, outflow or data processing of data, comprising also buffering of data, control functions and similar.

Further, the control device 115 may also comprise a sending circuit **530**, arranged to send a control signal in order to place the split gearbox 210 in a neutral position. The sending circuit 530 may also be arranged to send a control signal to engage the requested main gear 220 with zero shift technology, and may further be arranged to send a control signal in order to shift to the requested split gear 210.

The sending circuit 530 may in some embodiments be arranged to send a control signal to the shaft brake 240, in order to brake the input shaft 112. In some embodiments the sending circuit 530 may be arranged to send a control signal to the vehicle's engine 110, in order to increase the speed of the input shaft 112.

Further, the control device 115 may also comprise a receiving circuit **510**, arranged to receive signals over a wired or wireless interface. For example, a parameter value for a shift-controlling parameter may be obtained according to some embodiments. For example, obtaining such a parameter value may comprise detection by a sensor (speed sensor) 111 of the instantaneous speed level of the vehicle's engine 110.

In certain embodiments, the control device 115 comprises a memory device **525** consisting of a storage medium for data. Such a memory 525 may be arranged to store information, e.g. relating to shift points to engage this gear.

The memory device 525 may e.g. consist of a memory card, flash memory, USB memory, hard disk or other similar data storage device, e.g. one from the group: ROM (Read-Only Memory), PROM (Programmable Read-Only Memory), EPROM (Erasable PROM), Flash-memory, EEPROM (Electrically Erasable PROM), etc. in various embodiments.

Further, the invention comprises a computer program for control of an AMT gearbox 113 in a vehicle 100. The AMT gearbox 113 comprises a split gearbox 210 and a main gearbox 220, and is especially arranged for shifting with zero shift technology according to at least one of the previously described steps 401-406, wherein the computer program is executed in a processor circuit 520 in the control device 115.

The method 400, according to the steps 401-406 for the control of the AMT gearbox 113 in the vehicle 100, may be implemented through one or several processor circuits 520 in the control device 115, jointly with a computer program code in order to carry out one, several, any or all of the steps 401-406 described above. Thus, a computer program may comprise instructions to execute the steps 401-406 when the computer program is loaded in the processor circuit 520.

Further, some embodiments also comprise an AMT gearbox 113 in a vehicle 100. The gearbox 113 comprises a split gearbox 210 and a main gearbox 220, and is especially arranged for shifting with zero shift technology, wherein the AMT gearbox 113 is controlled by a control device 115 according to one of the embodiments described above. The AMT gearbox 113 may in some embodiments comprise a shaft brake 240, arranged in connection with the input shaft 112 on the gearbox 113.

Some embodiments of the invention also comprise a vehicle 100, which comprises the AMT gearbox 113 described above.

A speed of an axle or an engine, as referred to herein, relates to a rotational speed of the axle or the engine, which may be measured e.g. in rpm or rad/s.

## Claims

1. Method (400) in a control device (115) for control of an Automated Manual Transmission, AMT, gearbox (113) in a vehicle (100), wherein the AMT gearbox (113) comprises a split gearbox (210) and a main gearbox (220), and is especially arranged for shifting with zero shift technology, wherein the method (400) is **characterised by**:
detection (401) of a shift request;
placement (402) of the split gearbox (210) in a neutral position;
engagement (403) of a requested main gear (220) with zero shift technology; and
shifting (406) to a requested split gear (210).

2. Method (400) according to claim 1, further comprising:
determination (404) of a target speed for an input shaft (112) to the AMT gearbox (113); and
synchronisation (405) of the input shaft (112) with the determined (404) target speed; wherein the shifting (406) to the requested split gear (210) is done when the input shaft (112) has been synchronised (405) with the determined (404) target speed.

3. Method (400) according to claim 2, wherein the synchronisation (405) of the input shaft (112) with the target speed is carried out simultaneously with the engagement (403) of the requested main gear (220) with zero shift technology.

4. Method (400) according to any of claims 2-3, wherein the shifting (406) is made to a higher gear, wherein the target speed is lower than the speed of the input shaft (112), and wherein the synchronisation (405) of the input shaft (112) with the target speed comprises a reduction of the speed of the input shaft (112), by way of braking of said input shaft (112) with a shaft brake (240) arranged in connection with the input shaft (112).

5. The method (400) according to any of claims 2-3, wherein the shifting (406) is made to a lower gear, wherein the target speed is higher than the speed of the input shaft (112), and wherein the synchronisation (405) of the input shaft (112) with the target speed comprises an increase of the speed of the input shaft (112), by way of a speed increase with the vehicle's engine (110), connected to the input shaft (112).

6. Method according to any one of the preceding claims, wherein the shift request relates to a requested main gear only, and wherein the requested split gear consists of the same split gear as prior to the shift request.

7. Control device (115), arranged to control the shifting of an Automated Manual Transmission, AMT, gearbox (113) in a vehicle (100), wherein the AMT gearbox (113) comprises a split gearbox (210) and a main gearbox (220), and is especially arranged for shifting with zero shift technology, wherein the control device (115) is **characterised by**:
a processor circuit (520), which is arranged to detect a shift request, and is also arranged to generate a control signal to place the split gearbox (210) in a neutral position, and is also arranged to generate a control signal to engage a requested main gear (220) with zero shift technology, and is also arranged to generate a control signal to shift to a requested split gear (210).

8. The control device (115) according to claim 7, wherein
the processor circuit (520) is also arranged to determine a target speed for an input shaft (112) to the AMT gearbox (113), and is also arranged to synchronise the input shaft (112) with the determined target speed, and is also arranged to generate a control signal to shift to the requested split gear (210) when the input shaft (112) has been synchronised with the determined target speed.

9. The control device (115) according to claim 8, wherein:
the processor circuit (520) is also arranged to synchronise the input shaft (112) with the target speed simultaneously with the engagement of the requested main gear (220) with zero shift technology.

10. The control device (115) according to any of claims 8-9, wherein shifting is carried out to a higher gear, wherein the target speed is lower than the speed of the input shaft (112), and wherein
the processor circuit (520) is also arranged to synchronise the input shaft (112) with the target speed by reducing the speed of the input shaft (112), through generating a control signal in order to brake said input shaft (112) with a shaft brake (240), arranged in connection with the input shaft (112).

11. The control device (115) according to any of claims 8-9, wherein shifting is carried out to a lower gear, wherein the target speed is higher than the speed of the input shaft (112), and wherein
the processor circuit (520) is also arranged to synchronise the input shaft (112) with the target speed by increasing the speed of the input shaft (112), through generating a control signal in order to increase the speed of said input shaft (112) by way of a speed increase with the vehicle's engine (110), connected to the input shaft (112).

12. Computer program for control of an AMT gearbox (113) in a vehicle (100), wherein the AMT gearbox (113) comprises a split gearbox (210) and a main gearbox (220), and is especially arranged for shifting with zero shift technology, comprising execution of the method (400) according to any of claims 1-6, wherein the computer program is executed in a processor circuit (520) in a control device (115) according to any of claims 1-11.

13. AMT gearbox (113) in a vehicle (100), wherein the gearbox (113) comprises a split gearbox (210) and a main gearbox (220), and is especially arranged for shifting with zero shift technology, wherein the AMT gearbox (113) is controlled by a control device (115) according to any of claims 7-11, wherein the AMT gearbox (113) comprises a shaft brake (240) arranged in connection with the input shaft (112) on the AMT gearbox (113).

14. Vehicle (100) comprising an AMT gearbox (113) according to claim 13.
